# EUROPÄISCHE PATENTANMELDUNG

(11) **EP 3 070 385 A1**
(43) Veröffentlichungstag der Anmeldung: **21.09.2016**
(21) Anmeldenummer: 16151260.3
(22) Anmeldetag: 14.01.2016
(51) Int. Cl.: F16L 19/028

(54) **ROHRVERBINDUNGSSYSTEM**

(30) Priorität: 16.03.2015 DE 102015204689
(71) Anmelder: ContiTech Techno-Chemie GmbH, 61184 Karben (DE)
(72) Erfinder: Kupko, Rüdiger, 15366 Neuenhagen (DE); Breunung-Bockenheimer, Tanja, 61137 Schöneck Budesheim (DE)
(74) Vertreter: Finger, Karsten

(57) **Zusammenfassung**

Rohrverbindungssystem (2) aufweisend einen von einem Endabschnitt (8) eines ersten Rohrstücks (4) gebildeten, hohlzylindrischen Dichtungskonus (10), der radial außenseitig eine kegelstumpfmantelartige Dichtungsfläche (14) aufweist, und einen von einem Endabschnitt (16) eines zweiten Rohrstücks (6) gebildeten, hohlzylindrischen Gegendichtungskonus (18), der radial innenseitig eine kegelstumpfmantelartige Gegendichtungsfläche (22) aufweist, wobei die Dichtungsfläche (14) des Dichtungskonus (10) in einem ersten Winkel zu einer Längsachse des Dichtungskonus (10) ausgebildet ist, die Gegendichtungsfläche (22) des Gegendichtungskonus (18) in einem zweiten Winkel zu einer Längsachse des Gegendichtungskonus (18) ausgebildet ist, in der Demontagestellung sich der erste Winkel und der zweite Winkel voneinander unterscheiden, und in der Montagestellung der Dichtungskonus (10) und/oder der Gegendichtungskonus (18) durch das Einstecken derart elastisch verformt ist bzw. sind, dass die Dichtungsfläche (14) des Dichtungskonus (10) vollständig an der Gegendichtungsfläche (22) des Gegendichtungskonus (18) anliegt.

## Beschreibung

Die Erfindung betrifft Rohrverbindungssystem zum Verbinden eines ersten, hohlzylindrischen Rohrstücks mit einem zweiten, hohlzylindrischen Rohrstück, aufweisend einen von einem Endabschnitt des ersten Rohrstücks gebildeten, hohlzylindrischen Dichtungskonus, der zum Ende des ersten Rohrstücks in Radialrichtung verjüngend ausgestaltet ist und radial außenseitig eine kegelstumpfmantelartige Dichtungsfläche aufweist, und einen von einem Endabschnitt des zweiten Rohrstücks gebildeten, hohlzylindrischen Gegendichtungskonus, der zum Ende des zweiten Rohrstücks in Radialrichtung erweiternd ausgestaltet ist und radial innenseitig eine kegelstumpfmantelartige Gegendichtungsfläche aufweist, wobei der Dichtungskonus in einer Demontagestellung von dem Gegendichtungskonus getrennt ist, und der Dichtungskonus in einer Montagestellung derart in einen Hohlraum des Gegendichtungskonus eingesteckt ist, dass sich zwischen dem Dichtungskonus und dem Gegendichtungskonus eine umlaufende Dichtung ausbildet.

Rohrverbindungssysteme der zuvor genannten Art sind grundsätzlich aus dem Stand der Technik bekannt. Sie dienen zur Verbindung des ersten, hohlzylindrischen Rohrstücks mit dem zweiten, hohlzylindrischen Rohrstück, so dass die beiden Rohrstücke einen gemeinsamen, zylindrischen Kanal ausbilden. Durch diesen gemeinsamen Kanal kann ein Fluid gelenkt und/oder geleitet werden. Die Rohrstücke können jeweils eine beliebige Länge in Längsrichtung bzw. Axialrichtung aufweisen. In der Praxis steht das zu leitende Fluid unter Druck, oftmals sogar unter hohem Druck, beispielsweise mehr als 5 bar. Um einen Austritt des Fluids an der Verbindung der Rohrstücke zu verhindern, bedarf es einer fluiddichten Abdichtung. In Abhängigkeit des Betriebsdruckes des von den Rohrstücken geleiteten Fluids ist die Dichtung als Hochdruckdichtung auszugestalten.

Zur Herstellung von Dichtungen für die Verbindung von zwei Rohrstücken hat es sich in der Praxis bewährt, den Endabschnitt des ersten Rohrstücks derart auszubilden, dass dieser einen Dichtungskonus bildet. Der Endabschnitt des ersten Rohrstücks kann also nach Art eines Hohlkegelstumpfs ausgestaltet sein. Dabei ist das sich verjüngen Ende des Hohlkegelstumpfs dem Ende des Endabschnitts des ersten Rohrstücks zugewandt. Der Außendurchmesser verringert sich also mit sinkendem Abstand zu dem Ende des ersten Rohrstücks. Außenseitig bildet der Dichtungskonus eine Dichtungsfläche aus. Diese ist aufgrund der konusförmigen Ausgestaltung des Dichtungskonus kegelstumpfmantelartig. Korrespondierend zu dem Dichtungskonus ist ein hohlzylindrischer Gegendichtungskonus vorgesehen. Der Gegendichtungskonus bildet dabei die Aufnahme für den Dichtungskonus, so dass sich mit dem Einstecken des Dichtungskonus in den Hohlraum des Gegendichtungskonus eine Dichtung im Kontaktbereich zwischen dem Dichtungskonus und dem Gegendichtungskonus ausbilden kann. Der Gegendichtungskonus wird von einem Endabschnitt des zweiten Rohrstücks gebildet. Der Endabschnitt des zweiten Rohrstücks kann dazu nach Art eines Hohlkegelstumpfs ausgestaltet sein. Um den Dichtungskonus in den Hohlraum des Gegendichtungskonus einstecken zu können, ist das zum Ende des zweiten Rohrstücks ausgerichtete Ende des Gegendichtungskonus erweiternd ausgestaltet. Dabei erweitert sich der Innendurchmesser mit sinkendem Abstand zu dem Ende des zweiten Rohrstücks. Der Gegendichtungskonus weist radial innenseitige eine kegelstumpfmantelartige Gegendichtungsfläche auf.

Bevor die dichtende Verbindung zwischen den beiden Rohrstücken hergestellt ist, ist der Dichtungskonus in einer Demontagestellung. In der Demontagestellung ist der Dichtungskonus also von dem Gegendichtungskonus getrennt. Um nun die dichtende Verbindung zwischen den beiden Rohrstücken herzustellen, wird der Dichtungskonus in eine Montagestellung gebracht. In der Montagestellung ist der Dichtungskonus derart in einen Hohlraum des Gegendichtungskonus eingesteckt, dass ich sich zwischen dem Dichtungskonus und dem Gegendichtungskonus eine umlaufende Dichtung ausbildet. Dazu ist vorzugsweise der mittlere äußere Durchmesser des Dichtungskonus und der mittlere innere Durchmesser des Gegendichtungskonus korrespondierend ausgestaltet. So können sich die beiden Durchmesser zumindest im Wesentlichen gleichen oder mit einer Durchmesserabweichung von maximal 5 %, 10% oder 20% ausgestaltet sein.

Aus der Druckschrift DE 195 11 063 C2 ist ein derartiges Rohrverbindungssystem zu entnehmen. Das offenbarte Rohrverbindungssystem dient zum Verbinden eines ersten Rohrstücks mit einem zweiten Rohrstück. Ein Endabschnitt des ersten Rohrstücks ist kegelstumpfförmige ausgestaltet, wobei das sich verjüngende Ende des entsprechenden Kegelstumpfs zu dem Ende des ersten Rohrstücks zeigt. Ein Endabschnitt des zweiten Rohrstücks weist eine Kegelbohrung auf, wobei das sich verjüngende Ende in die kanalförmige Bohrung des zweiten Rohrstücks übergeht. Das sich erweiternde Ende der Kegelbohrung zeigt also zu dem Ende des zweiten Rohrstücks. Der Kegelwinkel des Kegelstumpf und der Kegelwinkel der Kegelbohrung sind identisch zueinander ausgestaltet. Um eine möglichst gute Dichtung der Verbindung zwischen den beiden Rohrstücken zu erreichen, wird in der genannten Druckschrift die Verwendung von zusätzlichem Dichtmittel vorgeschlagen. So ist es beispielsweise vorgesehen, auf den Kegelstumpf ein Dichtmittel in pastöser oder flüssiger Form aufzutragen, bevor das erste Rohrstück mit dem Kegelstumpf in die Kegelbohrung des zweiten Rohrstücks gesteckt wird, um die fluiddichte Verbindung zwischen den beiden Rohrstücken herzustellen. Zwischen dem Kegelstumpf und der Kegelbohrung entsteht mittels des Dichtmittels eine umlaufende Dichtung. Des Weiteren werden Dichtringe vorgeschlagen, die zur Axialdichtung oder Radialdichtung zwischen den beiden Rohrstücken verwendet werden können.

Ausgehend von dem zuvor erläuterten Stand der Technik liegt der Erfindung die Aufgabe zu Grunde, ein Rohrverbindungssystem zum Verbinden von zwei hohlzylindrischen Rohrstücken ohne zusätzliche Dichtmittel bereitzustellen, wobei die Verbindung mehrfach zerstörungsfrei montierbar und demontierbar sein soll.

Die Aufgabe der Erfindung wird gelöst durch das Rohrverbindungssystem mit den Merkmalen gemäß dem Patentanspruch 1. Vorgesehen ist also ein Rohrverbindungssystem zum Verbinden eines ersten, hohlzylindrischen Rohrstücks mit einem zweiten, hohlzylindrischen Rohrstück, aufweisend einen von einem Endabschnitt des ersten Rohrstücks gebildeten, hohlzylindrischen Dichtungskonus, der zum Ende des ersten Rohrstücks in Radialrichtung verjüngend ausgestaltet ist und radial außenseitig eine kegelstumpfmantelartige Dichtungsfläche aufweist, und einen von einem Endabschnitt des zweiten Rohrstücks gebildeten, hohlzylindrischen Gegendichtungskonus, der zum Ende des zweiten Rohrstücks in Radialrichtung erweiternd ausgestaltet ist und radial innenseitig eine kegelstumpfmantelartige Gegendichtungsfläche aufweist, wobei der Dichtungskonus in einer Demontagestellung von dem Gegendichtungskonus getrennt ist, und der Dichtungskonus in einer Montagestellung derart in einen Hohlraum des Gegendichtungskonus eingesteckt ist, dass sich zwischen dem Dichtungskonus und dem Gegendichtungskonus eine umlaufende Dichtung ausbildet, und wobei die Dichtungsfläche des Dichtungskonus in einem ersten Winkel zu einer Längsachse des Dichtungskonus ausgebildet ist, die Gegendichtungsfläche des Gegendichtungskonus in einem zweiten Winkel zu einer Längsachse des Gegendichtungskonus ausgebildet ist, und wobei für die Demontagestellung gilt, dass sich der erste Winkel und der zweite Winkel voneinander unterscheiden, und wobei für die Montagestellung gilt, dass der Dichtungskonus und/oder der Gegendichtungskonus durch das Einstecken derart elastisch verformt ist bzw. sind, dass die Dichtungsfläche des Dichtungskonus vollständig an der Gegendichtungsfläche des Gegendichtungskonus anliegt, so dass sich die Dichtung kegelstumpfmantelflächig ausbildet.

Das Rohrverbindungssystem dient also zum Verbinden von zwei Rohrstücken. Deshalb können das erste und das zweite Rohrstück von dem Rohrverbindungssystem umfasst sein. Der Erfindung liegt der Gedanke zu Grunde, die Elastizität der Endabschnitte der Rohrstücke zu verwenden, um eine fluiddichte Verbindung zwischen zwei Rohrstücken herzustellen. Dabei wird bewusst davon Abstand genommen, den ersten Winkel identisch zu dem zweiten Winkel zu wählen. Mit anderen Worten ist es vorgesehen, dass sich der Konuswinkel des Dichtungskonus von einem Konuswinkel des Gegendichtungskonus unterscheidet. Der Konuswinkel wird dabei durch den Schnittwinkel bestimmt, der bei einer gedachten Verlängerung der Dichtungsfläche bzw. der Gegendichtungsfläche entstehen würde. Wird der Dichtungskonus in den Hohlraum des Gegendichtungskonus gesteckt, kommt es zunächst zu einem kreislinienförmigen Kontakt zwischen dem Dichtungskonus und dem Gegendichtungskonus. Grundsätzlich kommt hierbei bereits eine Dichtung zwischen dem ersten Rohrstück und dem zweiten Rohrstück zustande. In der Praxis wurde festgestellt, dass ein derartiger kreislinienförmiger Kontakt bei auf die Rohrstücke einwirkenden Biegebelastungen unterbrochen werden kann. Als Folge entsteht eine Undichtigkeit, die zu vermeiden ist. Es ist deshalb vorgesehen, dass der Dichtungskonus in der Montagestellung derart in den Hohlraum des Gegenkonus eingesteckt ist, dass sich der Dichtungskonus und/oder der Gegendichtungskonus verformt bzw. verformen und dadurch die Dichtungsfläche des Dichtungskonus vollständig an der Gegendichtungsfläche des Gegendichtungskonus anliegt. Damit entsteht also kein kreislinienförmiger sondern ein umlaufender, zylinderringförmiger Kontakt. Aufgrund der konischen Ausgestaltung der Dichtungsfläche bzw. der Gegendichtungsfläche bildet sich zwischen den beiden zuvor genannten Flächen ein umlaufender kegelstumpfmantelartiger flächiger Kontaktbereich aus. Somit entsteht also durch den vollständigen Kontakt der Dichtungsfläche an der Gegendichtungsfläche eine kegelstumpfmantelflächige Dichtung. Diese Dichtung bleibt aufgrund der elastischen Verformung des Dichtungskonus bzw. des Gegendichtungskonus auch bei einer Biegebelastung des Rohrverbindungssystems erhalten. Darüber hinaus gewährleistet die genannte elastische Verformung eine hohe Vorspannung zwischen dem Dichtungskonus und dem Gegendichtungskonus, so dass die Verbindung zwischen den beiden Rohrstücken besonders fluiddicht, insbesondere auch bei hohen Fluiddrücken, ist. Hohe Fluiddrücke können sich aufgrund der Ausgestaltung der Dichtfläche zu der Gegendichtfläche positive auswirken. Denn mit einem hohen Fluiddruck verstärkt sich eine Andruckkraft der Dichtungsfläche an der Gegendichtungsfläche, was die Dichtigkeit der Verbindung zwischen den Rohrstücken weiter erhöht.

Mit dem Einstecken des Dichtungskonus und dem ggf. elastischen Verformen des Dichtungskonus kann der Dichtungskonus eine Materialverstärkung erfahren. Denn der Dichtungskonus wird mit Einstecken vorzugsweise gestaucht. Diese wirkt sich vorteilhaft auf die Stabilität der Verbindung aus, insbesondere wenn, wie im Folgenden erläutert, eine Überwurfmutter verwendet wird, um die Rohrstücke in Längsrichtung gegeneinander zu drücken oder zu pressen.

Um durch das Einstecken des Dichtungskonus in den Hohlraum des Gegendichtungskonus die elastische Verformung des Dichtungskonus und/oder des Gegendichtungskonus zu erreichen, kann dem Rohrverbindungssystem eine Längsaxialverspannungseinheit zugeordnet sein. Die Längsaxialverspannungseinheit kann dazu ausgebildet sein, das erste Rohrstück und das zweite Rohrstück in Längsrichtung zueinander zu drücken oder zu pressen. Eine besonders einfache Ausgestaltung der Längsaxialverspannungseinheit ist durch eine Verschraubung gebildet. So können das erste Rohrstück und der zweite Rohrstück derart miteinander verschraubt sein, dass die Verschraubung Kräfte in Längsrichtung auf die Rohrstücke ausübt, so dass diese gegeneinander gedrückt oder gepresst werden. Insbesondere kann dazu einem der Rohrstücke eine Überwurfmutter zugeordnet sein, die hinter eine Schulter oder eine Wulst des entsprechenden Rohrstücks greift und in ein Außengewinde des anderen Rohrstücks aufgeschraubt ist. Beim Festziehen der Verschraubung werden die beiden Rohrstücke in Längsrichtung gegeneinandergedrückt, so dass es zu der gewünschten, elastischen Verformung des Dichtungskonus und/oder des Gegendichtungskonus kommt, was die kegelstumpfmantelflächige Dichtung hervorruft.

Eine vorteilhafte Ausgestaltung des Rohmerbindungssystems zeichnet sich dadurch aus, dass der erste Winkel kleiner oder größer als der zweite Winkel ist. Ist der erste Winkel größer als der zweite Winkel, kommt es bei dem Einstecken des Dichtungskonus in den Hohlraum des Gegendichtungskonus zumindest im Wesentlichen zu einer elastischen Stauchung eines durchmessergrößeren Endes des Dichtungskonus und/oder zu einer elastischen Aufweitung des durchmessergrößeren Endes des Gegendichtungskonus. Ist der erste Winkel kleiner als der zweite Winkel, kommt es bei dem Einstecken des Dichtungskonus in den Hohlraum des Gegendichtungskonus zumindest im Wesentlichen zu einer elastischen Stauchung des durchmesserkleineren Endes des Dichtungskonus und/oder zu einer elastischen Aufweitung des durchmesserkleineren Endes des Gegendichtungskonus. Die Stauchung und/oder Ausweitung findet dabei zumindest im Wesentlichen im Bereich der Dichtungsfläche bzw. der Gegendichtungsfläche statt. Durch die elastische Verformung, also die elastische Stauchung und/oder elastische Aufweitung, wird die Dichtungsfläche vollständig mit einer, insbesondere hohen, Vorspannung gegen die Gegendichtungsfläche gedrückt. Dies gewährleistet die gewünschte Dichtigkeit auch bei hohen Drücken des Fluids in den Rohrabschnitten.

Eine weitere vorteilhafte Ausgestaltung des Rohrverbindungssystems zeichnet sich dadurch aus, dass eine Differenz zwischen dem ersten Winkel und dem zweiten Winkel in der Demontagestellung mindestens 1 Grad beträgt. In der Praxis wurde festgestellt, dass eine kleinere Differenz zwischen dem ersten Winkel und dem zweiten Winkel in der Demontagestellung nicht die gewünschte Zuverlässigkeit der Dichtung in der Montagestellung bietet, um das Fluid auch bei beispielsweise höherer Biegebelastung der Rohrstücke und/oder bei höheren Fluiddrücken an einem ungewollten Entweichen durch die Verbindung der Rohrstücke zu verhindern. Hingegen hat sich gezeigt, dass eine Differenz von mindestens 1 Grad zwischen dem ersten Winkel und dem zweiten Winkel das ungewollte Entweichen von Fluid unter vergleichbaren Bedingungen sicherstellt. Vorzugsweise beträgt die genannte Differenz mindestens 1,5 Grad oder mindestens 2 Grad. Damit wird die entsprechende Dichtigkeit unter vergleichbaren Bedingungen weiter erhöht.

Eine weitere vorteilhafte Ausgestaltung des Rohrverbindungssystems zeichnet sich dadurch aus, dass der erste Winkel und der zweite Winkel in der Montagestellung zumindest im Wesentlichen gleich sind. Indem der erste Winkel und der zweite Winkel in der Montagestellung durch die elastische Verformung beim Einstecken angeglichen sind, wird besonders einfach sichergestellt, dass die Dichtungsfläche vollständig an der Gegendichtungsfläche anliegt. In diesem Fall entsteht also ein ununterbrochener Kontakt zwischen der Dichtungsfläche und der Gegendichtungsfläche, so dass sich der erste Winkel und der zweite Winkel gleichen, zumindest an der Dichtungsfläche bzw. der Gegendichtungsfläche. Durch den flächigen Kontakt wird eine besonders druckresistente Dichtung gebildet. Ein entsprechendes Rohrverbindungssystem eignet sich also auch zum Verbinden von Rohrstücken, die zum Leiten von Fluid unter besonders hohem Druck vorgesehen sind.

Eine weitere vorteilhafte Ausgestaltung des Rohrverbindungssystems zeichnet sich dadurch aus, dass erste Winkel zwischen 23 Grad und 25 Grad, vorzugsweise 24 Grad, beträgt. Der genannte Winkelbereich hat sich in der Praxis als vorteilhaft erwiesen, um eine geeignete Vorspannung zwischen der Dichtungsfläche und der Gegendichtungsfläche zu erreichen, die eine vollständige Anlage der Dichtungsfläche an der Gegendichtungsfläche gewährleistet.

Eine weitere vorteilhafte Ausgestaltung des Rohrverbindungssystems zeichnet sich dadurch aus, dass das erste Rohrstück und/oder das zweite Rohrstück aus elastisch verformbaren Metall sind bzw. ist. Metall hat sich für die Rohrstücke als vorteilhaft erwiesen, da diese sowohl elastisch verformbar sind als auch hohen Fluiddrücken standhalten können. Außerdem ist ein Metall-Rohrstück besonders gut dazu geeignet, um durch einen entsprechenden Endabschnitt den Dichtungskonus bzw. den Gegendichtungskonus zu bilden.

Eine weitere vorteilhafte Ausgestaltung des Rohrverbindungssystems zeichnet sich dadurch aus, dass eine Erstreckung der Dichtungsfläche in einer Richtung mit dem ersten Winkel zu der Längsachse des Dichtungskonus mindestens 25%, eines Außendurchmessers des ersten Rohrstücks beträgt. Beträgt der Außendurchmesser des ersten Rohrstücks, zumindest im Mittel, beispielsweise 15 mm, so beträgt die zuvor genannte Erstreckung der Dichtungsfläche mindestens mm. Mit anderen Worten erstreckt sich die Dichtungsfläche in einer Richtung mit dem Winkel entsprechend des ersten Winkels zu der Längsachse des Dichtungskonus über mindestens 3,75 mm. Liegt die Dichtungsfläche gemäß der Montagestellung vollständig an der Gegendichtungsfläche an, kommt es aufgrund der zuvor genannten Erstreckung der Dichtungsfläche zu einem umlaufenden kegelstumpfmantelflächigen Kontakt. Eine entsprechende Dichtung bildet sich aus.

Eine weitere vorteilhafte Ausgestaltung des Rohmerbindungssystems zeichnet sich dadurch aus, dass der Dichtungskonus durch plastische Verformung, insbesondere Stauchen, des Endabschnitts des ersten Rohrstücks hergestellt ist. Der Dichtungskonus bildet vorzugsweise also einen integralen Teil des ersten Rohrstücks. In diesem Fall bedarf es keiner zusätzlichen Verbindung, insbesondere durch Anlöten oder Auflöten, zu dem Rohrstück. Durch die entsprechende einteilige Ausgestaltung sind die Handhabung und/oder die Montage der Rohrverbindung zwischen den Rohrstücken besonders einfach. Außerdem erhöht die einteilige Ausgestaltung des ersten Rohrstücks und/oder des zweiten Rohrstücks die Sicherheit der Verbindung, denn weitere Verbindungsstellen, die potentiell undicht sein könnten, werden vermieden.

Eine weitere vorteilhafte Ausgestaltung des Rohrverbindungssystems zeichnet sich dadurch aus, dass das zweite Rohrstück an dem zugehörigen Endabschnitt radial außenseitig ein Außengewinde aufweist, das erste Rohrstück an dem zugehörigen Endabschnitt eine radial nach außen ragende Rückhaltewulst aufweist, die in Axialrichtung des ersten Rohrstücks an einer von dem Ende des ersten Rohrstücks abgewandten Seite der Dichtungsfläche des Dichtungskonus angeordnet ist, und eine Überwurfmutter mit einem Klemmflansch-Abschnitt und einem Innengewinde-Abschnitt vorgesehen ist, wobei die Überwurfmutter derart ausgebildet und auf das erste Rohrstück aufgeschoben ist, dass der Klemmflansch-Abschnitt in Axialrichtung hinter die Rückhaltewulst fasst und der Innengewinde-Abschnitt in Radialrichtung über den Dichtungskonus fasst. Werden das erste Rohrstück und das zweite Rohrstück nun derart zusammengeführt, dass der Dichtungskonus in den Hohlraum des Gegendichtungskonus einfasst, kann das Innengewinde am Innengewindeabschnitt der Überwurfmutter in das Außengewinde des zweiten Rohrstücks eingreifen. Werden nun die Überwurfmutter und das zweite Rohrstück durch das Ineinandergreifen der Gewinde verschraubt, treffen der Dichtungskonus mit der Dichtungsfläche und der Gegendichtungskonus mit der Gegendichtungsfläche gegeneinander. Dies bewirkt die elastische Verformung des Dichtungskonus und/oder des Gegendichtungskonus, was die vollständige Anlage der Dichtungsfläche an der Gegendichtungsfläche hervorruft.

Eine weitere vorteilhafte Ausgestaltung des Rohmerbindungssystems zeichnet sich dadurch aus, dass das erste Rohrstück und das zweite Rohrstück durch den gleichen Werkstoff hergestellt sind. Insbesondere für den Fall, dass die Rohrstücke aus Metall hergestellt sind, verhindert die Verwendung von gleichen Wirkstoffen eine Oxidation. Die Rohrstücke und die Rohrverbindung sind deshalb besonders langlebig.

Die Erfindung wird nachstehend ohne Beschränkung des allgemeinen Erfindungsgedankens anhand von einem Ausführungsbeispiel unter Bezugnahme auf die Zeichnungen beschrieben. In den Zeichnungen zeigen:
- Fig. 1: eine schematische Querschnittsansicht des Rohrverbindungssystem in einer Demontagestellung, und
- Fig. 2: eine schematische Querschnittsansicht des Rohrverbindungssystem in einer Montagestellung.

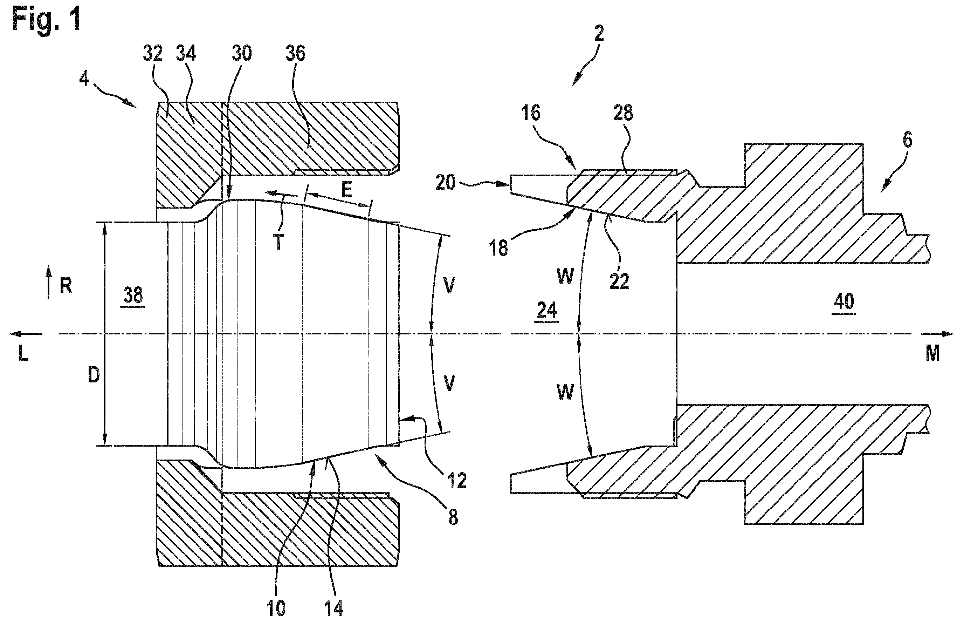

Aus der Figur 1 ist das Rohrverbindungssystem 2 in einem schematischen Querschnitt dargestellt. Das Rohrverbindungssystem 2 umfasst ein erstes Rohrstück 4 und ein zweites Rohrstück 6. Das erste Rohrstück 4 und das zweite Rohrstück 6 sind getrennt zueinander angeordnet. Somit ist das Rohrverbindungssystem 2 in einer Demontagestellung.

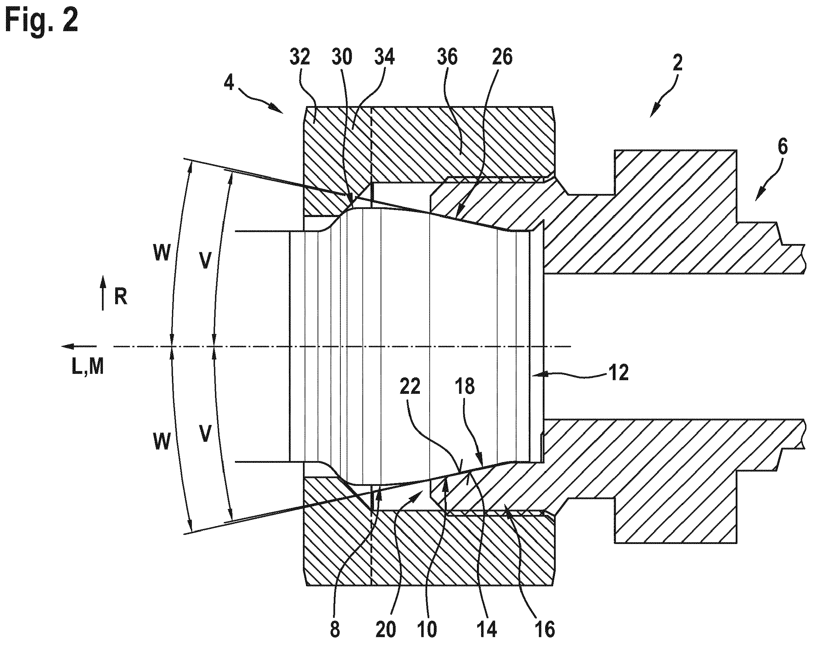

Sowohl das erste Rohrstück 4 als auch das zweite Rohrstück 6 sind hohlzylindrisch ausgestaltet. Sie bilden also jeweils einen innenliegenden Kanal 38, 40 zum Führen eines Fluids aus. Um Fluid möglichst präzise und/oder mit einer hohen Fließgeschwindigkeit zu führen, steht das Fluid zumeist unter hohem Druck. Um ein ungewolltes Ausströmen des Fluids an einer Verbindung zwischen dem ersten Rohrstück 4 und den zweiten Rohrstück 6 zu verhindern, sind das erste Rohrstück 4 und das zweite Rohrstück 6 fluiddicht zu verbinden. Zu diesem Zweck ist ein von einem Endabschnitt 8 des ersten Rohrstücks 4 gebildeter, hohlzylindrischer Dichtungskonus 10 vorgesehen. Zu dem Ende 12 des ersten Rohrstücks 4 ist der Dichtungskonus 10 verjüngen ausgestaltet. Radial außenseitig weist der Dichtungskonus 10 eine kegelstumpfmantelartige Dichtungsfläche 14 auf. Diese Dichtungsfläche 14 dient zur Abdichtung des ersten Rohrstücks 4 gegenüber dem zweiten Rohrstück 6. Deshalb ist von einem Endabschnitt 16 des zweiten Rohrstücks 6 ein hohlzylindrischer Gegendichtungskonus 18 gebildet. Zu einem Ende 20 des zweiten Rohrstücks 6 ist der Gegendichtungskonus 18 erweiternd ausgestaltet. Somit kann der Dichtungskonus 10 in den von dem Gegendichtungskonus 18 gebildeten Hohlraum 24 eingesteckt werden. Radial innenseitige weist der Gegendichtungskonus 18 eine kegelstumpfmantelartige Gegendichtungsfläche 22 auf. Die Dichtungsfläche 14 und die Gegendichtungsfläche 22 dienen zur fluiddichten Abdichtung des ersten Rohrstücks 4 gegenüber dem zweiten Rohrstück 6. Dazu ist der Dichtungskonus 10 in einer Montagestellung, wie sie in Figur 2 wiedergegeben ist, derart in den Hohlraum 24 des Gegendichtungskonus 18 eingesteckt, dass sich zwischen dem Dichtungskonus 10 und dem Gegendichtungskonus 18 eine umlaufende Dichtung 26 ausbildet.

Für das Rohrverbindungssysteme 2 ist es grundsätzlich vorgesehen, dass die Dichtungsfläche 14 des Dichtungskonus 10 in einem ersten Winkel V zu einer Längsachse L des Dichtungskonus 10 und die Gegendichtungsfläche 22 des Gegendichtungskonus 18 in einem zweiten Winkel W zu einer Längsachse M des Gegendichtungskonus 18 ausgebildet sind. Um die Dichtung 26 möglichst robust gegenüber Biegebelastungen der Rohrstücke 4, 6 und/oder hohen Fluiddrücken auszugestalten, unterscheiden sich der erste Winkel V und der zweite Winkel W in der Demontagestellung des Rohrverbindungssystems 2. Die Demontagestellung zeichnen sich dadurch aus, dass der Dichtungskonus 10 und der Gegendichtungskonus 18 getrennt zueinander angeordnet sind. Durch die Abweichung der Winkel V, W, die sich vorzugsweise durch mindestens 1 Grad, 1,5 Grad oder 2 Grad unterscheiden, wird gewährleistet, dass die Dichtungsfläche 14 bei einem Einstecken des Dichtungskonus 10 in den Hohlraum 24 des Gegendichtungskonus 18 zuerst winkelig auf die Gegendichtungsfläche 22 trifft. Zum Überführen des Rohrverbindungssystem 2 von der Demontagestellung in die Montagestellung wird der Dichtungskonus 10 in den Hohlraum 24 des Gegendichtungskonus 18 derart weit eingesteckt, dass sich der Dichtungskonus 10 und/oder der Gegendichtungskonus 18 elastisch verformt bzw. verformen, so dass die Dichtungsfläche 14 vollständig an der Gegendichtungsfläche 22 anliegt. Dies ist in Figur 2 dargestellt. Durch das vollständige Anliegen der Dichtungsfläche 14 an der Gegendichtungsfläche 22 bildet sich die umlaufende kegelstumpfmantelflächige Dichtung 26 aus. Diese Dichtung 26 ist aufgrund ihrer kegelstumpfmantelflächigen Ausbildung besonders resistent gegenüber hohen Drücken eines Fluids, dass von den Rohrstücken 4, 6 geleitet werden kann. Darüber hinaus bleibt die Dichtung 26 erhalten, wenn die Rohrstücke 4, 6 einer Biegebelastung ausgesetzt sind. Denn das Anliegen der Dichtungsfläche 14 an der Gegendichtungsfläche 22 erfolgt durch elastische Verformung des Dichtungskonus 10 und/oder des Gegendichtungskonus 18. Somit besteht zwischen der Dichtungsfläche 14 und der Gegendichtungsfläche 22 eine Vorspannung, die den zylinderringförmigen Kontakt zwischen der Dichtungsfläche 14 und der Gegendichtungsfläche 22 auch unter hohen Belastungen sicherstellt.

In der Praxis hat es sich als vorteilhaft erwiesen, wenn die Erstreckung E der Dichtungsfläche 14 in einer Richtung T mit dem ersten Winkel V zu der Längsachse L des Dichtungskonus 10 mindestens 25% eines Außendurchmessers D des ersten Rohrstücks 4 beträgt. Ist der Außendurchmesser D des ersten Rohrstücks 4, zumindest im Mittel, beispielsweise 15 mm, so beträgt die zuvor genannte Erstreckung E der Dichtungsfläche 14 mindestens mm. Mit anderen Worten erstreckt sich die Dichtungsfläche 14 in einer Richtung T mit dem Winkel entsprechend des ersten Winkels V zu der Längsachse L des Dichtungskonus 10 über mindestens 3,75 mm. Liegt die Dichtungsfläche 14 gemäß der Montagestellung vollständig an der Gegendichtungsfläche 22 an, kommt es aufgrund der zuvor genannten Erstreckung E der Dichtungsfläche 14 zu einem umlaufenden kegelstumpfmantelflächigen Kontakt. Eine entsprechende Dichtung bildet sich aus.

Um die elastische Verformung des Dichtungskonus 10 und/oder des Gegendichtungskonus 18 mit dem Einstecken des Dichtungskonus 10 in den Hohlraum 24 des Gegendichtungskonus 18 zu gewährleisten, ist bevorzugt eine Verschraubung zwischen dem ersten Rohrstück 4 und dem zweiten Rohrstück 6 vorgesehen. Dazu kann das erste Rohrstück 4 an dem zugehörigen Endabschnitt 8 eine radial nach außen tragende Rückhaltewulst 30 aufweisen. Die Rückhaltewulst 30 ist in Axialrichtung der Längsachse L des ersten Rohrstücks 4 an einer von dem Ende 12 des ersten Rohrstücks 4 abgewandten Seite der Dichtungsfläche 14 des Dichtungskonus 10 angeordnet. Die Rückhaltewulst 30 dient als Mittel um Kräfte in Längsrichtung L auf den Endabschnitt 8 des ersten Rohrstücks 4 einwirken zu lassen. Dafür ist eine Überwurfmutter 32 vorgesehen. Diese weist einen Klemmflansch-Abschnitt 34 und einen Innengewinde-Abschnitt 36 auf. Dabei ist die Überwurfmutter 32 derart ausgebildet und auf das erste Rohrstück 4 aufgeschoben, dass der Klemmflansch-Abschnitt 34 in Axialrichtung hinter die Rückhaltewulst 30 fasst und der Innengewinde-Abschnitt 36 in Radialrichtung R über den Dichtungskonus 10 fasst. Außerdem weist das zweite Rohrstück 6 an dem zugehörigen Endabschnitt 16 radial außenseitig ein Außengewinde 28 auf. Wird der Dichtungskonus 10 nun in den Hohlraum 24 des Gegendichtungskonus 18 gesteckt, kann das Innengewinde der Überwurfmutter 32 in das Außengewinde 28 fassen. Durch ein Festschrauben dieses Gewindes wird der Dichtungskonus 10 gegen den Gegendichtungskonus 18 gepresst. Dabei kommt es zu der gewünschten elastischen Verformung des Dichtungskonus 10 und/oder des Gegendichtungskonus, so dass die Dichtungsfläche 14 vollständig zum Anliegen an der Gegendichtungsfläche 22 kommt.

### Bezugszeichenliste (Teil der Beschreibung)

- D: Außendurchmesser
- E: Erstreckung
- L: Längsachse
- M: Längsachse
- R: Radialrichtung
- T: Richtung
- V: erster Winkel
- W: zweiter Winkel
- 2: Rohrverbindungssystem
- 4: erstes Rohrstück
- 6: zweites Rohrstück
- 8: Endabschnitt
- 10: Dichtungskonus
- 12: Ende
- 14: Dichtungsfläche
- 16: Endabschnitt
- 18: Gegendichtungskonus
- 20: Ende
- 22: Gegendichtungsfläche
- 24: Hohlraum
- 26: Dichtung
- 28: Außengewinde
- 30: Rückhaltewulst
- 32: Überwurfmutter
- 34: Klemmflansch-Abschnitt
- 36: Innengewinde-Abschnitt
- 38: Kanal
- 40: Kanal

## Patentansprüche

1. Rohrverbindungssystem (2) zum Verbinden eines ersten, hohlzylindrischen Rohrstücks (4) mit einem zweiten, hohlzylindrischen Rohrstück (6), aufweisend
- einen von einem Endabschnitt (8) des ersten Rohrstücks (4) gebildeten, hohlzylindrischen Dichtungskonus (10), der zum Ende (12) des ersten Rohrstücks (4) in Radialrichtung R verjüngend ausgestaltet ist und radial außenseitig eine kegelstumpfmantelartige Dichtungsfläche (14) aufweist, und
- einen von einem Endabschnitt (16) des zweiten Rohrstücks (6) gebildeten, hohlzylindrischen Gegendichtungskonus (18), der zum Ende (20) des zweiten Rohrstücks (6) in Radialrichtung R erweiternd ausgestaltet ist und radial innenseitig eine kegelstumpfmantelartige Gegendichtungsfläche (22) aufweist,
- wobei der Dichtungskonus (10) in einer Demontagestellung von dem Gegendichtungskonus (18) getrennt ist, und
- der Dichtungskonus (10) in einer Montagestellung derart in einen Hohlraum (24) des Gegendichtungskonus (18) eingesteckt ist, dass sich zwischen dem Dichtungskonus (10) und dem Gegendichtungskonus (18) eine umlaufende Dichtung (26) ausbildet,
**dadurch gekennzeichnet, dass**
- die Dichtungsfläche (14) des Dichtungskonus (10) in einem ersten Winkel V zu einer Längsachse L des Dichtungskonus (10) ausgebildet ist,
- die Gegendichtungsfläche (22) des Gegendichtungskonus (18) in einem zweiten Winkel W zu einer Längsachse M des Gegendichtungskonus (18) ausgebildet ist,
- für die Demontagestellung gilt, dass sich der erste Winkel V und der zweite Winkel W voneinander unterscheiden, und
- für die Montagestellung gilt, dass der Dichtungskonus (10) und/oder der Gegendichtungskonus (18) durch das Einstecken derart elastisch verformt ist bzw. sind, dass die Dichtungsfläche (14) des Dichtungskonus (10) vollständig an der Gegendichtungsfläche (22) des Gegendichtungskonus (18) anliegt, so dass sich die Dichtung (26) kegelstumpfmantelflächig ausbildet.

2. Rohrverbindungssystem (2) nach dem vorhergehenden Anspruch, **dadurch gekennzeichnet, dass** der erste Winkel V kleiner oder größer als der zweite Winkel W ist.

3. Rohrverbindungssystem (2) nach einem der vorhergehenden Ansprüche, **dadurch gekennzeichnet, dass** eine Differenz zwischen dem ersten Winkel V und dem zweiten Winkel W in der Demontagestellung mindestens 1 Grad beträgt.

4. Rohrverbindungssystem (2) nach einem der vorhergehenden Ansprüche, **dadurch gekennzeichnet, dass** der erste Winkel V und der zweite Winkel W in der Montagestellung zumindest im Wesentlichen gleich sind.

5. Rohrverbindungssystem (2) nach einem der vorhergehenden Ansprüche, **dadurch gekennzeichnet, dass** erste Winkel V zwischen 23 Grad und 25 Grad, vorzugsweise 24 Grad, beträgt.

6. Rohrverbindungssystem (2) nach einem der vorhergehenden Ansprüche, **dadurch gekennzeichnet, dass** das erste Rohrstück (4) und/oder das zweite Rohrstück (6) aus elastisch verformbaren Metall sind bzw. ist.

7. Rohrverbindungssystem (2) nach einem der vorhergehenden Ansprüche, **dadurch gekennzeichnet, dass** eine Erstreckung E der Dichtungsfläche (14) in einer Richtung T mit dem ersten Winkel V zu der Längsachse L des Dichtungskonus (10) mindestens 25% eines Außendurchmessers D des ersten Rohrstücks (4) beträgt.

8. Rohrverbindungssystem (2) nach einem der vorhergehenden Ansprüche, **dadurch gekennzeichnet, dass** der Dichtungskonus (10) durch plastische Verformung, insbesondere Stauchen, des Endabschnitts (8) des ersten Rohrstücks (4) hergestellt ist.

9. Rohrverbindungssystem (2) nach einem der vorhergehenden Ansprüche, **dadurch gekennzeichnet, dass**
- das zweite Rohrstück (6) an dem zugehörigen Endabschnitt (16) radial außenseitig ein Außengewinde (28) aufweist,
- das erste Rohrstück (4) an dem zugehörigen Endabschnitt (8) eine radial nach außen ragende Rückhaltewulst (30) aufweist, die in Axialrichtung des ersten Rohrstücks (4) an einer von dem Ende (12) des ersten Rohrstücks (4) abgewandten Seite der Dichtungsfläche (14) des Dichtungskonus (10) angeordnet ist, und
- eine Überwurfmutter (32) mit einem Klemmflansch-Abschnitt (34) und einem Innengewinde-Abschnitt (36) vorgesehen ist,
- wobei die Überwurfmutter (32) derart ausgebildet und auf das erste Rohrstück (4) aufgeschoben ist, dass der Klemmflansch-Abschnitt (34) in Axialrichtung hinter die Rückhaltewulst (30) fasst und der Innengewinde-Abschnitt (36) in Radialrichtung R über den Dichtungskonus (10) fasst.

10. Rohrverbindungssystem (2) nach einem der vorhergehenden Ansprüche, **dadurch gekennzeichnet, dass** das erste Rohrstück (4) und das zweite Rohrstück (6) durch den gleichen Werkstoff hergestellt sind.
